# EUROPÄISCHE PATENTSCHRIFT

(11) **EP 0 587 602 B1**
(45) Veröffentlichungstag und Bekanntmachung des Hinweises auf die Patenterteilung: **13.03.1996**
(21) Anmeldenummer: 92910481.8
(22) Anmeldetag: 23.05.1992
(51) Int. Cl.: H05B 41/231, H05B 41/16, H05B 41/02

(54) **VORRICHTUNG ZUM BETREIBEN EINER GASENTLADUNGSLAMPE**
DEVICE FOR OPERATING A GAS DISCHARGE LAMP
DISPOSITIF POUR L'EXPLOITATION D'UNE LAMPE A DECHARGE

(30) Priorität: 01.06.1991 DE 4118077
(43) Veröffentlichungstag der Anmeldung: 23.03.1994
(73) Patentinhaber: ROBERT BOSCH GMBH, D-70442 Stuttgart (DE)
(72) Erfinder: VOGEL, Manfred, D-7257 Ditzingen-Heimerdingen (DE); DREWS, Ulrich, D-7143 Vaihingen/Pulverdingen (DE); HERDEN, Werner, D-7016 Gerlingen (DE); KONRAD, Johann, D-7146 Tamm (DE); GERHARD, Albert, D-7146 Tamm (DE)
(86) Internationale Anmeldenummer: DE9200422
(87) Internationale Veröffentlichungsnummer: WO9222182

(56) Entgegenhaltungen:
- EP-A- 0 063 168
- DE-A- 2 247 213
- DE-A- 3 710 275

## Beschreibung

### Stand der Technik

Die Erfindung geht aus von einer Vorrichtung zum Betreiben einer Gasentladungslampe nach der Gattung des Hauptanspruchs. Aus dem Fachbuch "Lamps and Lighting, Thorn EMI Lighting Ltd., Edward Arnold-Verlag, London, 1983 S. 334" ist eine derartige Vorrichtung bekannt, die ein an die Lampe geschaltetes Zündteil sowie ein Leistungsteil zur Energieversorgung der Lampe enthält. Das Leistungsteil ist als Vorschaltgerät mit einer Drossel ausgebildet, das am Stromversorgungsnetz angeschlossen ist. Die unmittelbar an der Lampe auftretenden Zündspannungsimpulse wirken auf das Leistungsteil zurück. Die im Vorschaltgerät vorhandene Drossel entzieht der vom Zündteil zur Verfügung gestellten Zündenergie einen Anteil, der vom Zündteil zusätzlich bereitgestellt werden muß.

Der Erfindung liegt die Aufgabe zugrunde, die Rückwirkungen des vom Zündteil abgegebenen Zündimpulses auf den Leistungsteil zu verringern.

Diese Aufgabe wird durch die im Hauptanspruch angegebenen Merkmale gelöst.

### Vorteile der Erfindung

Der erfindungsgemäß zwischen der Lampe und dem Leistungsteil angeordnete Schalter trennt das Leistungsteil von der Lampe zumindest zu Beginn des Zündvorgangs ab, bei dem hohe Spitzenwerte der Zündimpulsspannung auftreten. Der Schalter verbindet erst nach dem Einleiten des Zündvorgangs das Leistungsteil mit der Lampe. Mit dieser Maßnahme werden Rückwirkungen, die durch den Zündimpuls auf das Leistungsteil auftreten könnten, wirksam verhindert. Besonders vorteilhaft ist es, daß die vom Zündteil zur Verfügung gestellte Zündenergie vollständig der Lampe zuführbar ist.

Vorteilhafte Weiterbildungen und Verbesserungen der erfindungsgemäßen Vorrichtung ergeben sich aus Unteransprüchen.

Der Schalter ist beispielsweise als elektrisch ansteuerbarer Schalter realisierbar.

Besonders geeignet ist ein optisch ansteuerbarer Schalter, bei dem eine galvanische Trennung zwischen Schalter und dessen Ansteuerung gegeben ist. Besonders einfach ist die Schalteransteuerung dann, wenn die von der Lampe abgegebene Strahlung nach dem Einleiten des Zündvorgangs zur Betätigung des Schalters herangezogen wird. Die Strahlung ist beispielsweise über einen Lichtleiter führbar, der aber bei entsprechender Ausrichtung des Schalters in Bezug auf die Lampe - so daß die Strahlung der Lampe den Schalter direkt erreicht - auch entfallen kann.

In einer anderen vorteilhaften Weiterbildung sind Mittel zum Erfassen des eingeleiteten Zündvorgangs vorgesehen. Diese Mittel geben jeweils ein Ansteuersignal an einen elektrisch ansteuerbaren Schalter ab.

Als Mittel sind beispielsweise eine Vorrichtung zum Erfassen der an der Lampe liegenden Spannung oder der Spannungsänderungsgeschwindigkeit, ein Sensor zum Erfassen des durch die Lampe fließenden Stromes oder ein Sensor zur Erfassung der von der Lampe emittierten Strahlung vorgesehen.

In einer vorteilhaften Ausgestaltung der erfindungsgemäßen Vorrichtung ist als Schalter eine optisch ansteuerbare Kippdiode vorgesehen.

Die erfindungsgemäße Vorrichtung ist besonders geeignet zum Betreiben von Hochdruck-Gasentladungslampen, weil diese Lampen besonders hohe Zündspannungen im Vergleich zur anschließenden Brennspannung im Dauerbetrieb benötigen.

Weitere vorteilhafte Weiterbildungen der erfindungsgemäßen Vorrichtung ergeben sich aus weiteren Unteransprüchen in Verbindung mit der folgenden Beschreibung.

### Zeichnung

Eine erfindungsgemäße Vorrichtung zum Betreiben einer Gasentladungslampe ist als Blockschaltbild in Figur 1 gezeigt. Ausgestaltungen der erfindungsgemäßen Vorrichtung sind in den Figuren 2 und 3 gezeigt.

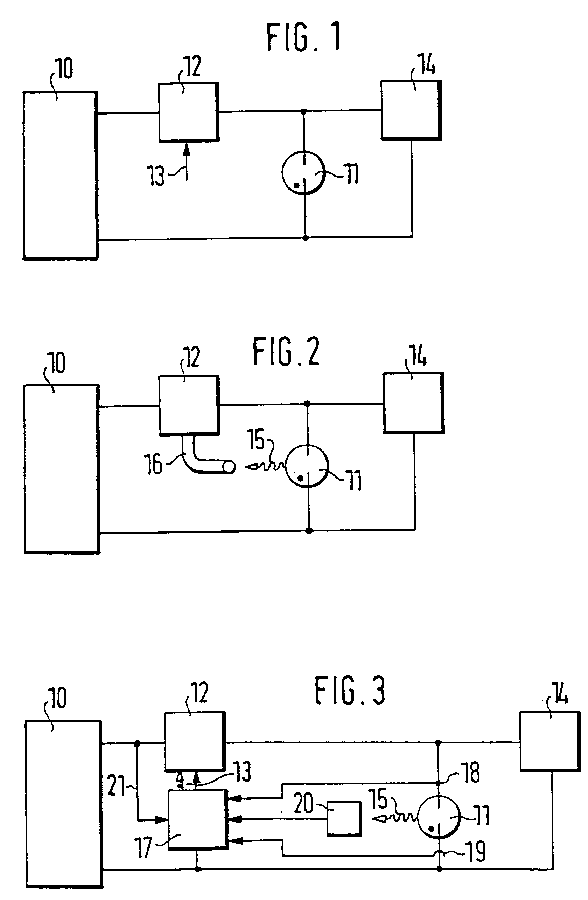

In Figur 1 ist ein Leistungsteil 10 zur Energieversorgung einer Gasentladungslampe 11 vorgesehen. Zwischen Lampe 11 und Leistungsteil 10 ist ein Schalter 12 angeordnet, dem ein Eingangssignal 13 zuführbar ist. An der Lampe 11 ist ein Zündteil 14 angeschlossen.

Der zwischen dem Leistungsteil 10 und der Lampe 11 angeordnete Schalter 12 hat die Aufgabe, das Leistungsteil 10 zumindest während der Zündung der Lampe 11 von der Lampe 11 abzutrennen. Nach dem Einleiten des Zündvorgangs in der Lampe 11 verbindet der Schalter 12 die Lampe 11 mit dem Leistungsteil 10. Mit dem Schließen des Schalters 12 übernimmt das Leistungsteil 10 die Energieversorgung der Lampe 11. Mit dieser Maßnahme wird der im Vergleich zur Brennspannung der Lampe 11 hohe Zündspannungsimpuls vom Leistungsteil 10 ferngehalten. Eine Auslegung des Leistungsteils 10 zum Widerstehen der hohen Impulsspannungen ist somit nicht erforderlich. Die vollständige Abtrennung der übrigen Schaltungsteile von der Lampe 11 während der Zündung ermöglicht es, die gesamte vom Zündteil 14 zur Verfügung gestellte Energie der Lampe 11 zuzuführen. Dies ist insbesondere dann von Vorteil, wenn eine Hochdruck-Gasentladungslampe gezündet werden soll, die einen sehr hohen Zündspannungsbedarf im Vergleich zur Brennspannung aufweist.

In Abhängigkeit von der Auswahl des speziellen Schaltertyps ist ein Eingangssignal 13 zum Einschalten des Schalters 12 erforderlich. In einem bevorzugten Ausführungsbeispiel ist aber kein spezielles Eingangssignal erforderlich.

Dieses Ausführungsbeispiel ist in Figur 2 gezeigt. Der Schalter 12 ist dort als optisch ansteuerbarer Schalter 12 ausgebildet. Die von der Lampe 11 emittierte Strahlung 15, die nach dem Einleiten des Zündvorgangs auftritt, ist gleichzeitig das Eingangssignal des Schalters 12. Bei einer geeigneten Ausrichtung des Schalters 12 in Bezug auf die Lampe 11 sind keine weiteren Mittel zur Strahlungsführung erforderlich. Sofern eine räumliche Trennung zwischen Schalter 12 und Lampe 11 vorgesehen ist, kann die Strahlung 15 mit einem optischen Element 16 dem Schalter 12 zugeleitet werden. Das optische Element 16 ist vorteilhafterweise als Lichtleiter ausgebildet.

Als Schalter 12 ist gleichermaßen ein elektrisch ansteuerbarer Schalter 12 geeignet.

Ein Ausführungsbeispiel der erfindungsgemäßen Vorrichtung mit einem elektrischen Schalter 12 ist in Figur 3 gezeigt. Die in Figur 3 gezeigten Teile, die mit den in den Figuren 1 und 2 gezeigten Teile übereinstimmen, tragen in Figur 3 dieselben Bezugszahlen wie in den Figuren 1 und 2. Das optische oder elektrische Eingangssignal 13 des Schalters 12 wird von einer Signalaufbereitung 17 bereitgestellt. Die Signalaufbereitung 17 wirkt mit Mitteln zusammen, die das Einleiten des Zündvorgangs der Lampe 11 erfassen. Als Mittel sind beispielsweise eine Vorrichtung 18 zum Erfassen der Spannung vorgesehen, welche die an der Lampe 11 auftretende Spannung erfaßt. Nach dem Einleiten des Zündvorgangs bricht die Zündimpulsspannung auf eine im Vergleich zur Scheitelwert geringe Spannung zusammen. Durch Vergleich der an der Lampe auftretenden Spannung mit einem Schwellwert wird das Einschalten des Schalters 12 vorgenommen. Anstelle einer Spannungsmessung ist es vorzugsweise auch möglich, die Spannungsänderungsgeschwindigkeit zu ermitteln und mit einem Schwellwert zu vergleichen. Ein hoher Wert der Änderungsgeschwindigkeit im Bereich der Spannungsabnahme zeigt das Durchschlagen und somit das Zünden der Lampe 11 an. Das Erfassen des Zündvorgangs ist auch mit Mitteln 19 zum Erfassen des durch die Lampe 11 fließenden Stroms möglich. Der Stromfühler 19 ist beispielsweise als Rogowski-Spule oder als Shuntwiderstand realisierbar. Sobald ein Strom durch die Lampe 11 fließt, ist der Zündvorgang eingeleitet. Durch Vergleich des Stromes mit einem Schwellwert wird der Schalter 12 eingeschaltet.

Als Mittel zum Erfassen des Zündvorgangs ist ein Sensor 20 zum Aufnehmen der von der Lampe 11 emittierten Strahlung 15 vorgesehen. Sobald die Lampe 11 eine Strahlung 15 emittiert, ist der Zündvorgang eingeleitet. Durch Vergleich des vom Strahlungssensor 20 abgegebenen Signals mit einem Schwellwert wird der Schalter 12 eingeschaltet.

Die angegebenen Mittel 18, 19, 20 sowie die jeweils angegebenen Auswerteverfahren können sowohl einzeln als auch in beliebiger Kombination vorgesehen sein.

Der Schalter 12 ist vorzugsweise als ein Halbleiterbauelement ausgebildet. Besonders geeignet sind optisch ansteuerbare Schalter 12, welche die von der Lampe 11 emittierte Strahlung 15 ausnutzen zum Einschalten. Besonders vorteilhaft ist eine optisch ansteuerbare Kippdiode, die besonders preiswert ist und dennoch die erforderlichen Eigenschaften hinsichtlich Spannungsfestigkeit, Festigkeit gegenüber hohen Spannungsänderungsgeschwindigkeiten, und eines niedrigen Innenwiderstands im eingeschalteten Zustand aufweist. Sofern Schalter mit Thyristorkennlinie verwendet werden, wie zum Beispiel Kippdioden, kann das in Figur 3 gezeigte Blockschaltbild der erfindungsgemäßen Vorrichtung durch eine weitere Ansteuerung 21 der Signalaufbereitung 17 ergänzt werden, weil in Abhängigkeit von der Ausführung des Schalters 12 ein Übergang in den Sperrzustand bei Stromnulldurchgängen auftreten kann. Diese Nulldurchgänge treten bei der Energieversorgung der Lampe 11 mit Wechselstrom auf. Die weitere Ansteuerung 21 ist im einfachsten Fall eine Verbindungsleitung, die die Signalaufbereitung 17 mit dem Ausgang des Leistungsteils 10 verbindet. Das Leistungsteil 10 kann aus dem dort auftretenden Strom oder aus der dort auftretenden Spannung während jeder Periode des Wechselstroms ein Eingangssignal 13 für den Schalter 12 ableiten. Alternativ zu einer weiteren Ansteuerung 21 kann die Frequenz des Leistungsteils 10 so gewählt werden, daß die Thyristoren oder Kippdioden infolge ihrer Freiwerdezeit leitend bleiben.

Sofern optisch ansteuerbare Schalter 12 verwendet werden, die direkt von der emittierten Strahlung 15 der Lampe 11 angesteuert werden, sind Mittel zum periodischen Einschalten des Schalters 12 nach jedem Nulldurchgang des Stromes nicht erforderlich, weil die von der Lampe 11 emittierte Strahlung 15 während des Lampenbetriebs keine Einbrüche auf den Wert Null oder in die Nähe von Null aufweist, so daß die Strahlung 15 während jeder Periode das erforderliche Eingangssignal zum Wiedereinschalten des Schalters 12 gewährleistet.

Das Zündteil 14 kann derart ausgebildet sein, daß es nicht nur einen Zündimpuls, sondern eine Folge von Zündimpulsen abgibt. Auch in diesem Fall stellt der Schalter 12 eine Trennung zwischen Leistungsteil 10 und Lampe 11 sicher, weil der Schalter 12 während des Zündvorgangs, der durch einen der Zündimpulse ausgelöst wird, noch gesperrt ist. Diejenigen Zündimpulse, die nach dem Einleiten des Zündvorgangs gegebenenfalls noch auftreten, ergeben nur noch geringe Amplituden an der Lampe 11.

## Patentansprüche

1. Vorrichtung zum Betreiben einer Gasentladungslampe, mit einem an die Lampe geschalteten Zündteil und mit einem Leistungsteil zur Energieversorgung der Lampe, dadurch gekennzeichnet, daß zwischen dem Leistungsteil (10) und der Lampe (11) ein Schalter (12) angeordnet ist, der nach dem Einleiten des Zündvorgangs das Leistungsteil (10) mit der Lampe (11) verbindet.

2. Vorrichtung nach Anspruch 1, dadurch gekennzeichnet, daß Mittel (18, 19, 20) zum Erfassen des Zündvorgangs vorgesehen sind.

3. Vorrichtung nach Anspruch 2, dadurch gekennzeichnet, daß Mittel (18) zum Erfassen der an der Lampe (11) auftretenden Spannung und/oder der an der Lampe (11) auftretenden Spannungsänderungsgeschwindigkeit vorgesehen sind.

4. Vorrichtung nach Anspruch 2 oder 3, dadurch gekennzeichnet, daß Mittel (19) zum Erfassen des durch die Lampe (11) fließenden Stroms vorgesehen sind.

5. Vorrichtung nach einem der Ansprüche 2 bis 4, dadurch gekennzeichnet, daß als Mittel ein Strahlungssensor (20) zum Erfassen der von der Lampe (11) emittierten Strahlung (15) vorgesehen sind.

6. Vorrichtung nach einem der vorhergehenden Ansprüche, dadurch gekennzeichnet, daß ein elektrisch ansteuerbarer Schalter (12) vorgesehen ist.

7. Vorrichtung nach einem der Ansprüche 1 bis 5, dadurch gekennzeichnet, daß ein optisch ansteuerbarer Schalter (12) vorgesehen ist.

8. Vorrichtung nach Anspruch 7, dadurch gekennzeichnet, daß die Strahlung (15) der Lampe (11) mit einem optischen Element (16), vorzugsweise einem Lichtleiter, dem optisch ansteuerbaren Schalter (12) zugeführt ist.

9. Vorrichtung nach einem der vorhergehenden Ansprüche, dadurch gekennzeichnet, daß als Schalter (12) eine optisch triggerbare Kippdiode vorgesehen ist.

10. Vorrichtung nach einem der Ansprüche 1 bis 7 und 9, dadurch gekennzeichnet, daß die Frequenz des Leistungsteils so gewählt wird, daß der Schalter 12 nach Triggerung ohne weitere Ansteuerimpulse leitend bleibt.

## Claims

1. Device for operating a gas discharge lamp, having an ignition section connected to the lamp and having a power section for powering the lamp, characterized in that a switch (12) which connects the power section (10) to the lamp (11) after initiation of the ignition process is arranged between the power section (10) and the lamp (11).

2. Device according to Claim 1, characterized in that means (18, 19, 20) are provided for detecting the ignition process.

3. Device according to Claim 2, characterized in that means (18) are provided for detecting the voltage occurring across the lamp (11) and/or the rate of change of voltage occurring across the lamp (11).

4. Device according to Claim 2 or 3, characterized in that means (19) are provided for detecting the current flowing through the lamp (11).

5. Device according to one of Claims 2 to 4, characterized in that the means are provided as a radiation sensor (20) for detecting the radiation (15) emitted by the lamp (11).

6. Device according to one of the preceding claims, characterized in that an electrically controllable switch (12) is provided.

7. Device according to one of Claims 1 to 5, characterized in that an optically controllable switch (12) is provided.

8. Device according to Claim 7, characterized in that the radiation (15) of the lamp (11) is fed to the optically controllable switch (12) by means of an optical element (16), preferably a light guide.

9. Device according to one of the preceding claims, characterized in that an optically triggerable breakover diode is provided as the switch (12).

10. Device according to one of Claims 1 to 7 and 9, characterized in that the frequency of the power section is selected such that the switch (12) remains on after triggering without further control pulses.

## Revendications

1. Dispositif d'exploitation d'une lampe à décharge à gaz avec un dispositif d'allumage monté sur la lampe et avec un élément de puissance d'alimentation de la lampe en énergie, caractérisé en ce qu'entre l'élément de puissance (10) et la lampe (11) est disposé un interrupteur (12) qui, après l'amorçage du processus d'allumage relie l'élément de puissance (10) à la lampe (11).

2. Dispositif selon la revendication 1, caractérisé en ce que l'on prévoit des moyens (18, 19, 20) pour détecter le processus d'allumage.

3. Dispositif selon la revendication 2, caractérisé en ce que des moyens (18) sont prévus pour détecteur la tension qui survient sur la lampe (11) et/ou la vitesse de variation de la tension qui se produit sur la lampe (11).

4. Dispositif selon la revendication 2 ou 3, caractérisé en ce que l'on prévoit des moyens (19) pour détecter l'intensité qui passe à travers la lampe (11).

5. Dispositif selon l'une des revendications 2 à 4, caractérisé en ce que l'on prévoit comme moyen un détecteur de rayonnement (20) pour détecter le rayonnement (15) émis par la lampe (11).

6. Dispositif selon l'une des revendications précédentes, caractérisé en ce que l'on prévoit un interrupteur (12) pouvant être commandé électriquement.

7. Dispositif selon l'une des revendications 1 à 5, caractérisé en ce que l'on prévoit un interrupteur (12) qui peut être commandé de façon optique.

8. Dispositif selon la revendication 7, caractérisé en ce que le rayonnement (15) de la lampe (11) est amené par un élément optique (16), de préférence une fibre optique, à l'interrupteur (12) qui peut être commandé de façon optique.

9. Dispositif selon l'une des revendications précédentes, caractérisé en ce que l'on prévoit comme interrupteur (12) une diode à bascule que l'on peut déclencher de façon optique.

10. Dispositif selon l'une des revendications 1 à 7 et 9, caractérisé en ce que la fréquence de l'élément de puissance est choisie de telle façon que l'interrupteur (12) demeure conducteur après le déclenchement sans autres impulsions de commande.
